# EUROPEAN PATENT APPLICATION

(11) **EP 1 787 966 A1**
(43) Date of publication of application: **23.05.2007**
(21) Application number: 05767426.9
(22) Date of filing: 29.07.2005
(51) Int. Cl.: C03C 17/38, B32B 9/00

(54) **ANTI-FOGGING ARTICLE AND PROCESS FOR PRODUCING THE SAME**

(30) Priority: 29.07.2004 JP 2004221545
(71) Applicant: Nippon Sheet Glass Company, Limited, Tokyo 105-8552 (JP)
(72) Inventor: MATSUDA, Mizuho NIPPON SHEET GLASS COMP., Ltd., Tokyo 1058552 (JP); KAMITANI, Kazutaka NIPPON SHEET GLASS COMP., Ltd., Minato-ku, Tokyo 1058552 (JP); SUNAGA, Takeshi NIPPON SHEET GLASS COMP., Ltd., Minato-ku, Tokyo 1058552 (JP); YABUTA, Takeshi NIPPON SHEET GLASS COMP., Ltd., Minato-ku, Tokyo 1058552 (JP)
(74) Representative: Hubert, Philippe
(86) International application number: PCT/JP2005/013963
(87) International publication number: WO 2006/011605

(57) **Abstract**

The present invention improves abrasion resistance and persistence of anti-fogging properties of an anti-fogging article. The anti-fogging article of the present invention includes an article, a porous film formed on the surface thereof, and a hydrophilic film formed thereon. The porous film contains inorganic fine particles and a binder. The binder covers at least a part of surfaces of the inorganic fine particles and is interposed between the inorganic fine particles. The binder contains a metal oxide as its main component and a hydrophilic organic group other than an alkoxyl group. The hydrophilic film contains a hydrophilic organic polymer.

## Description

### Technical Field

The present invention relates to anti-fogging articles and processes for producing the same.

### Background Art

For example, mirrors that are installed in bathrooms and window glasses for vehicles that are typified by those for automobiles are required to have anti-fogging properties from the viewpoint of practical use. As is well known, the surface of glass exhibits anti-fogging properties when a surfactant is applied thereto, but the anti-fogging properties are not retained for a long period of time.

Formation of a film having minute irregularities on a glass surface can improve the anti-fogging properties of the glass surface. For instance, JP61(1986)-091042A discloses an anti-fogging glass with an inorganic oxide thin film having irregularities formed at its surface.

Anti-fog mirrors with heaters disposed on the back surfaces thereof have been used practically JP7(1995)-164971A proposes improvement of an anti-fog mirror with a heater used therein. This anti-fog mirror includes a heater disposed on the back surface thereof, and an undercoating layer having minute irregularities and a water-absorbing polymer layer that are formed in this order on the front side thereof. However, various restrictions accompany the placement of the heater. Accordingly, films have been studied that can provide sufficiently high anti-fogging properties without using heaters.

The anti-fogging article disclosed in JP11(1999)-100234A includes a film that provides a coating. The film contains metal oxide fine particles whose diameters are 4 to 300 nm and metal oxide that serves as a matrix. The film has irregularities at its surface. This film is formed by a so-called sol-gel process in which a solution is used that contains metal alkoxide dissolved therein and metal oxide fine particles dispersed therein.

JP11(1999)-100234A also proposes to apply a surfactant onto the film having irregularities at its surface. First, a layer is formed on the film having irregularities at its surface as required. The layer is formed of organosilane containing at least one functional group selected from a polyalkylene oxide group, an alkyl group, an alkenyl group, and an aryl group, or hydrolysates thereof. The above-mentioned functional group has lower reactivity as well as lower polarity Hence, when the above-mentioned layer is formed, dirt tends not to be fixed to the surface. In addition, a surfactant is applied onto the above-mentioned film having irregularities or the above-mentioned layer.

JP2003-73146A discloses a hydrophilic mirror with a film that provides a coating. The film contains metal oxide fine particles having hydroxyl groups at the surfaces thereof and a nonionic surfactant that are added thereto.

### Disclosure of Invention

The technique disclosed in JP11(1999)-100234A allows excellent anti-fogging properties to be retained over a relatively long period. However, the abrasion resistance of the hydrophilic film formed through application of a surfactant has remained at a level that requires further improvement. Furthermore, when the surfactant is removed by abrasion and this results in exposure of the film containing metal oxide fine particles, the anti-fogging properties deteriorate considerably since the film does not have sufficiently high hygroscopicity, which has been a problem.

Similarly in JP2003-73146A, the surfactant tends to be removed by abrasion and the remaining film alone cannot exhibit sufficiently high anti-fogging properties.

Hence, the present invention provides an anti-fogging article that includes: an article; a porous film formed on the surface of the article; and a hydrophilic film formed on the porous film. The porous film contains inorganic fine particles and a binder. The binder covers at least a part of surfaces of the inorganic fine particles and is interposed between the inorganic fine particles. The binder contains a metal oxide as its main component and a hydrophilic organic group other than an alkoxyl group. The hydrophilic film contains a hydrophilic organic polymer.

The present invention also provides a process for producing an anti-fogging article that includes an article, a porous film formed on the surface of the article, and a hydrophilic film formed on the porous film. The process includes: forming the porous film by applying a first coating solution onto the surface of the article and then drying the surface of the article; and forming the hydrophilic film by applying a second coating solution containing a hydrophilic organic polymer onto the porous film. The first coating solution contains: (1) inorganic fine particles; (2) a silane coupling agent having a hydrophilic organic group other than an alkoxyl group, or a hydrolysate of the silane coupling agent; (3) a hydrolyzable and condensation-polymerizable organometallic compound having an alkoxyl group, or a hydrolysate of the organometallic compound; and (4) a solvent.

In the present invention, a hydrophilic organic group other than an alkoxyl group is introduced into the binder for binding inorganic fine particles in forming the porous film. This allows the abrasion resistance of the hydrophilic film formed on the porous film to improve and excellent anti-fogging properties to be retained over a long period of time.

### Brief Description of Drawings

FIG. 1 is a diagram showing a cross section of one embodiment of the anti-fogging articles according to the present invention.
FIG. 2 is a SEM image showing the result of observation of the cross section of a glass sheet with a porous film according to Example 1.
FIG. 3 is a SEM image showing the result of observation of the surface of the glass sheet with a porous film according to Example 1.
FIG. 4 is a SEM image showing the result of observation of the cross section of the anti-fogging article according to Example 1.
FIG. 5 is a SEM image showing the result of observation of the surface of the anti-fogging article according to Example 1.
FIG. 6 is a SEM image showing the result of observation of the cross section of a glass sheet with a porous film according to Example 4.
FIG. 7 is a SEM image showing the result of observation of the surface of the glass sheet with a porous film according to Example 4.

### Description of the Invention

At least one selected from an amino group, an epoxy group, a ureido group, and a polyalkylene oxide group is suitable as the hydrophilic organic group other than the alkoxyl group. Such a functional group has a high hydrophilic property and therefore contributes considerably to the improvement in anti-fogging performance. Furthermore, such a functional group can be present stably even during the hydrolysis of the alkoxyl group. When a hydrophilic organic polymer having a carboxyl group or an acid anhydride structural unit is used for forming the hydrophilic film, it is advantageous to use at least one selected from an amino group, an epoxy group, and a ureido group that are highly reactive to the carboxyl group. In this case, the acid anhydride is specifically carboxylic anhydride, and the acid anhydride structural unit can be indicated by - OC - O - CO -.

A functional group having a -NH₂ structure at its end may be used as a highly hydrophilic organic group. When a functional group having a -NH₂ structure at its end is used together with a hydrophilic organic polymer having a carboxyl group or an acid anhydride structural unit, a part of the functional group reacts with, for example, the carboxyl group at the interface of the film and thereby the abrasion resistance of the hydrophilic film improves.

In the anti-fogging article of the present invention, an organic group such as those examples described above is introduced into the binder of the porous film, so that the hydrophilic property of the porous film is improved. The hydrophilization of the porous film contributes to retention of anti-fogging properties after the hydrophilic film formed on the porous film is lost due to abrasion or the like. Furthermore, the hydrophilization of the porous film also can contribute to improvement in the abrasion resistance of the hydrophilic film through the improvement in the affinity of the porous film for the hydrophilic film.

The inorganic fine particles contained in the porous film allow the porous film to be tolerant of compressive forces perpendicular to the surface thereof, due to their own hardness. Apart of the anti-fogging film permeates into the gaps formed among the inorganic fine particles. This results in an increased area where the porous film and the anti-fogging film are joined to each other. In addition, the degree of adhesion improves due to the complex shape of the joint surface. This structure considerably improves durability of the hydrophilic film to abrasion caused by friction along the surface, which is important practically.

The inorganic fine particles can be fine particles of oxide such as alumina. However, it is advantageous to use fine silica particles as the inorganic fine particles. The diameters of the inorganic fine particles are preferably 20 nm to 300 nm, particularly 20 nm to 100 nm. When the diameters are less than 20 nm, gaps are not formed sufficiently in the film. On the other hand, when the diameters exceed 300 nm, the film has deteriorated transparency. The transparency of the film is one of the important characteristics for the major applications of anti-fogging articles that are typified by mirrors.

The binder of the porous film has a function of fixing inorganic fine particles and contains metal oxide as its main component. In this specification, the "main component" denotes a component that accounts for at least 50 mass% as is commonly used. An organic matter or hydroxide that originates in the raw materials and the process may remain in the binder.

Preferably, the metal oxide that is the main component of the binder is silicon oxide. When the main component is silicon oxide, the organometallic compound to be added to the first coating solution for forming the porous film is a silicon compound that is typified by silicon alkoxide. The silicon compound may be a compound obtained by substituting at least one alkoxyl group of silicon tetraalkoxide by a chloro group.

The thickness of the porous film is not particularly limited but is preferably 20 nm to 300 nm.

The article on which the porous film and the hydrophilic film are to be formed is not particularly limited. Glass, resin, ceramic, etc. can be used as the article.

The porous film may be formed by the so-called sol-gel process. Specifically, the porous film can be formed by applying the first coating solution onto the surface of an article and drying the surface of the article. The first coating solution contains: (1) inorganic fine particles; (2) a silane coupling agent having a hydrophilic organic group other than an alkoxyl group or a hydrolysate thereof; (3) a hydrolyzable and condensation-polymerizable organometallic compound having an alkoxyl group, or a hydrolysate thereof, and (4) a solvent.

As described above, fine silica particles are suitable as the inorganic fine particles described in item (1). Specifically, it is advantageous to use colloidal silica. Colloidal silica has a uniform particle diameter and has a silanol group at the surface thereof. Accordingly, colloidal silica is highly reactive to a hydrolysate of a silane coupling agent, for example.

A compound expressed by R_{F}Si(OR)₃ is preferable as the silane coupling agent described in item (2), where R_{F} denotes an organic group containing a functional group indicated as an example above. In this case, R denotes an alkyl group with a carbon number of 1 to 5, preferably 1 to 3, and at least a part of the alkoxyl group may be substituted by chlorine atoms.

The organometallic compound described in item (3) is preferably, for example, metal alkoxide, particularly silicon tetraalkoxide (Si(OR)₄). Similarly in this case, R denotes an alkyl group with a carbon number of 1 to 5, preferably 1 to 3. At least a part of the alkoxyl group may be substituted by chlorine atoms.

The solvent described in item (4) is alcohol with a carbon number of 1 to 5, for example.

The first coating solution further may contain water and a hydrolysis catalyst. The hydrolysis catalyst to be used herein can be an acid or base that has been well-known conventionally.

It is advantageous to prepare the first coating solution so that the ratio (M2/M1) of the mass M2 of an organic group-containing silicon oxide produced through dehydration of the hydrolysate of the silane coupling agent described in item (2) to the mass M1 of a metal oxide produced through dehydration of the hydrolysate of the organometallic compound described in item (3) is 0.01 to 5.0, preferably 0.01 to 0.2. When the silane coupling agent described in item (2) is expressed by R_{F}Si(OR)₃, the above-mentioned organic group-containing silicon oxide is expressed by R_{F}SiO_{3/2}.

Following the step of applying the first coating solution, a step of drying the surface of the article is carried out to remove the solvent and other surplus components. In the drying step, the surface of the article can be dried by allowing it to stand at room temperature, but the article can be heated. This heating can be carried out at a temperature determined in consideration of the heat resistance of the article. The temperature is preferably in the range of 200°C or lower, for example.

The hydrophilic organic polymer is not particularly limited but preferably is one having a carboxyl group or an acid anhydride structural unit in the present invention. This is because excellent anti-fogging properties can be obtained based on a high hydrophilic property. The carboxyl group has a high polarity and a high hydrophilic property. Furthermore, the acid anhydride is used suitably to introduce many hydrophilic functional groups into the film since it has a high density of carboxyl groups.

It is particularly preferable that the hydrophilic organic polymer have a structural unit indicated by the following chemical formula 1 or a structural unit produced through hydrolysis of the above-mentioned structural unit.

[Chemical Formula 1]

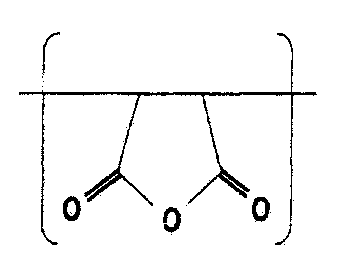

The hydrophilic organic polymer can be a copolymer of an acid anhydride and a vinyl group-containing compound. As in the case of this copolymer, when the hydrophilic organic polymer is neither an anionic surfactant nor a nonionic surfactant, the second coating solution that is used for forming the hydrophilic film further may contain at least one selected from an anionic surfactant and a nonionic surfactant. This is because it allows the anti-fogging properties to improve further. In this case, the hydrophilic film further contains the anionic surfactant and/or the nonionic surfactant. Dialkylsodium sulfosuccinate is used suitably as the anionic surfactant.

The hydrophilic film containing the hydrophilic organic polymer can be formed by applying the second coating solution onto the porous film. The second coating solution further may contain a crosslinking agent. The crosslinking agent may contain an epoxy group.

Similarly after the step of applying the second coating solution, a step of drying the surface of the article can be carried out to remove surplus liquid components. After the formation of the hydrophilic film, the article may be heated to 50°C to 250°C, preferably 100°C to 200°C. With heating, the dehydration and condensation reaction between carboxyl groups proceeds. When this reaction is allowed to proceed at a temperature in the range described above, the water resistance of the film can be improved while the hydrophilic property of the film is retained. In this case, the water resistance of the film denotes a property that prevents the hydrophilic components from eluting and that allows the anti-fogging properties to be retained when a large amount of moisture adheres to the film surface in practical use, for example.

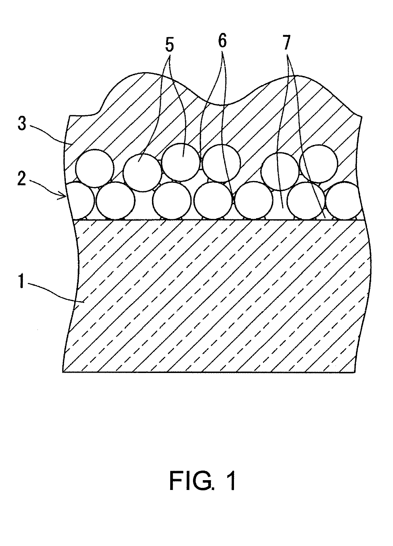

FIG. 1 shows the cross-section of an example of the anti-fogging articles of the present invention. In this anti-fogging article, a porous film 2 and a hydrophilic film 3 are formed in this order on the surface of an article 1. The porous film 2 contains inorganic fine particles 5 and a binder 6 that is interposed between the inorganic fine particles 5. While covering at least a part of surfaces of the inorganic fine particles 5, the binder 6 is interposed between the inorganic fine particles 5 as well as between the inorganic fine particles 5 and the surface of the article 1 to fix a group of inorganic fine particles.

In the case of using inorganic fine particles having highly hydrophilic surfaces, such as colloidal silica, it is considered that the silane coupling agent and the organometallic compound mostly cover the surfaces of the inorganic fine particles 5 and form a very thin film that is too thin to be indicated in the drawings. As described above, the binder 6 is interposed between the inorganic fine particles 5 and also may cover the surfaces of the inorganic fine particles 5 substantially. When the amount of organometallic compound to be added is smaller, the binder 6 may be present only in the further vicinities of the contact parts of the inorganic fine particles 5 as compared to the case of the embodiment shown in the drawing.

The porous film 2 contains holes 7 formed among the inorganic fine particles 5. The holes 7 provide water absorptivity and thereby contribute to the retention of anti-fogging properties particularly after the hydrophilic film 3 is lost due to abrasion. The hydrophilic film 3 has permeated into parts of the porous structure formed of the porous film 2. In other words, the hydrophilic film 3 is present in some parts of the gaps formed among the inorganic fine particles 5.

### EXAMPLES

In the following examples, a porous film and a hydrophilic film (an anti-fogging film) were formed in this order on the surface of a glass sheet and thereby an anti-fogging article was obtained.

### <Coating Solution for Forming Porous Film>

Table 1 indicates the composition ratios of solid contents of each coating solution for forming a porous film. The coating solutions each contain an aqueous colloidal silica dispersion that is a supply source of inorganic fine particles, an ethanol based solvent, tetraethoxysilane (hereinafter abbreviated as "TEOS") that is a hydrolyzable and condensation-polymerizable organometallic compound, and concentrated hydrochloric acid that serves as a catalyst. Furthermore, the coating solutions also contain 3-ureidopropyltriethoxysilane (hereinafter abbreviated as "UPTS") having a ureido group, as a silane coupling agent having a hydrophilic organic group.

The details of the respective components of each coating solution for forming a porous film are described below.
* Aqueous Colloidal Silica Dispersion:
   - ST-C, manufactured by Nissan Chemical Industries, Ltd., spherical colloidal silica with a particle diameter of 10 to 20 nm and a solid content concentration of 20 mass%.
   - ST-OUP, manufactured by Nissan Chemical Industries, Ltd., chain colloidal silica with a particle diameter of 10 to 20 nm, a length of 40 to 300 nm, and a solid content concentration of 15 mass%.
* Ethanol Based Solvent: AP-7, manufactured by Japan Alcohol Trading Co., Ltd.
* Concentrated Hydrochloric Acid: HCl, manufactured by Kishida Chemical Co., Ltd.
* TEOS: KBE-04, manufactured by Shin-Etsu Chemical Co., Ltd.
* UPTS: KBE-585, manufactured by Shin-Etsu Chemical Co., Ltd.

These components were mixed together and then were stirred in a sample bottle for about two hours. Thus solutions (A) to (F) were obtained. The solution (E) does not contain UPTS while the solution (F) is free from colloidal silica.

**[Table 1]**

| (mass%) | | | | | | |
|---|---|---|---|---|---|---|
| | (A) | (B) | (C) | (D) | (E) | (F) |
| CS Type | ST-C | ST-C | ST-OUP | ST-C | ST-OUP | ---- |
| CS | 0.15 | 0.10 | 0.15 | 0.15 | 0.15 | ---- |
| TEOS | 0.10 | 0.10 | 0.10 | 0.10 | 0.10 | 0.10 |
| UPTS | 0.008 | 0.008 | 0.008 | 0.027 | ---- | 0.008 |
| HCl | 2.00 | 2.00 | 2.00 | 2.00 | 2.00 | 2.00 |
| Ethanol Based Solvent | Balance | Balance | Balance | Balance | Balance | Balance |

| | | | | | | |
|---|---|---|---|---|---|---|
| * CS: colloidal silica * The mass% of TEOS was calculated as the amount of SiO₂ produced when 100% of added amount thereof had been hydrolyzed. * The mass% of UPTS was calculated as the amount of R_{f}SiO_{3/2} produced when 100% of added amount thereof had been hydrolyzed. In this case, R_{f}= NH₂CONHC₃H₆-. | | | | | | |

### <Coating Solution for Anti-Fogging Film>

Table 2 indicates the compositions of coating solutions for forming anti-fogging films with which porous films are coated.

A solution (a) is an aqueous solution of hydrophilic organic polymer (GANTREZ AN-119, manufactured by International Specialty Products (ISP)) that is a copolymer of methyl vinyl ether and maleic anhydride. With respect to GANTREZ AN-119, a 1-mass% aqueous solution was prepared beforehand and then was stirred in an atmosphere of 50°C overnight. Thus GANTREZAN-119 whose maleic anhydride part had been hydrolyzed was used (the same applies to solutions (b) and (c)).

A solution (b) is an aqueous solution of: sodium dioctyl sulfosuccinate (RAPISOL A-30, manufactured by NOF CORPORATION) that is a surfactant; and a copolymer of methyl vinyl ether and maleic anhydride (GANTREZ AN-119).

A solution (c) is an aqueous solution of: sodium dioctyl sulfosuccinate; a copolymer of methyl vinyl ether and maleic anhydride (GANTREZ AN-119); and ethylene glycol diglycidyl ether (DENACOL EX-810, manufactured by Nagase ChemteX Corporation) that is an epoxy compound. The epoxy compound serves as a crosslinking agent for the copolymer of methyl vinyl ether and maleic anhydride.

**[Table 2]**

| (mass%) | | | |
|---|---|---|---|
| | (a) | (b) | (c) |
| Copolymer of Methyl Vinyl Ether and Maleic Anhydride | 0.10 | 0.10 | 0.10 |
| Sodium Dioctyl Sulfosuccinate | -- | 0.01 | 0.01 |
| Ethylene Glycol Diglycidyl Ether | -- | -- | 0.005 |
| Purified Water | Balance | Balance | Balance |

The anti-fogging glass sheets obtained according to the present invention were evaluated in terms of the following various characteristics.

### <Characteristic Evaluation>

### 1. Appearance Evaluation

Defects such as application unevenness, streaks, etc. of the anti-fogging films that were caused through flow coating were judged visually. The judgment standard is as follows.
○: The surface is uniform without having unevenness, streaks, etc.
Δ: Unevenness and streaks are observed slightly but do not reach the level that hinders vision when light is transmitted.
×: Haze (cloudiness), unevenness, etc. hinder vision.

### 2. Evaluation of Anti-Fogging Properties

The anti-fogging properties were evaluated by an exhalation method in which a certain amount of exhaled air was blown onto the anti-fogging glass sheets kept at room temperature and then the degree of cloudiness was judged visually. The judgment standard is as follows.
⊚: Exhalation causes no cloudiness.
○: Exhalation causes slight cloudiness.
Δ: Exhalation causes water droplets or a water film to be formed.
×: Exhalation causes cloudiness to a degree equal to or more than that to which common glass sheets become cloudy.

### 3. Evaluation of Abrasion Resistance

Reciprocating friction was applied to the film surface with a wet cloth and then the degree of flaws caused at the surface was judged visually. In addition, the evaluation of anti-fogging properties obtained after the test also was carried out using the same judgment standard as described above. The judgment standard is as follows.
⊚: No flaws can be observed visually and the original state is maintained nearly perfect.
○: No flaws can be observed visually and the anti-fogging properties are retained.
Δ: Flaws are observed visually, but the anti-fogging properties are retained or are deteriorated slightly.
×: Flaws and film separation are observed visually and the anti-fogging properties are deteriorated considerably.

### 4. Evaluation of Retention of Anti-Fogging Properties

The anti-fogging glass sheets were allowed to stand in a room for one month and thereafter the anti-fogging properties thereof were judged by the above-mentioned exhalation method. The judgment standard is as follows.
⊚: The anti-fogging properties do not change at all.
○: The anti-fogging properties are retained almost perfectly.
×: The anti-fogging properties deteriorate and the anti-fogging glass sheet becomes cloudy to a similar degree to that to which a common glass sheet would become cloudy.

### Example 1

### (1) Formation of Inorganic Porous Film

A soda-lime glass sheet (100 × 100 × 3.4 mm) that had been washed was flow-coated with a solution (A). Thus an inorganic porous film was formed. The flow coating was carried out in a room whose temperature and humidity were controlled to 20°C and 30%, respectively. After this porous film was formed, the glass sheet was allowed to stand to be dried. This further was allowed to stand at room temperature overnight. Thus a glass sheet with the porous film was obtained.

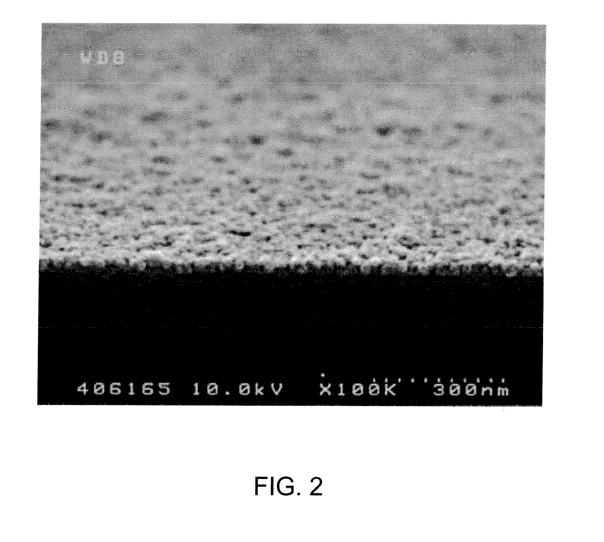

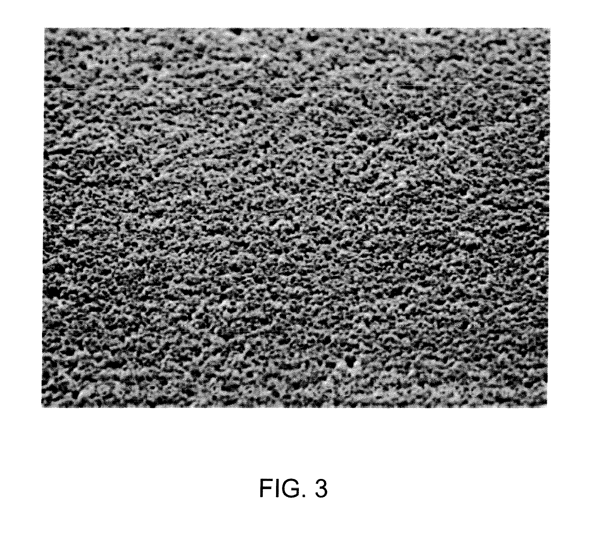

The surface of the glass sheet with the porous film thus obtained was observed with a scanning electron microscope (SEM). The results are shown in FIGs. 2 and 3. FIG. 2 shows the result of observation of the cross section, while FIG. 3 shows the result of observation of the surface. It was found out that this porous film had a porous structure having an average thickness of about 50 nm that was formed with about one or two fine particles whose diameters were about 20 nm being stacked together in the film thickness direction.

### (2) Formation of Anti-Fogging Film

The glass sheet with the porous film obtained in the process (1) was flow-coated with the solution (A). Thus an anti-fogging film was formed. The flow coating was carried out in a room whose temperature and humidity were adjusted to 20°C and 30%, respectively.

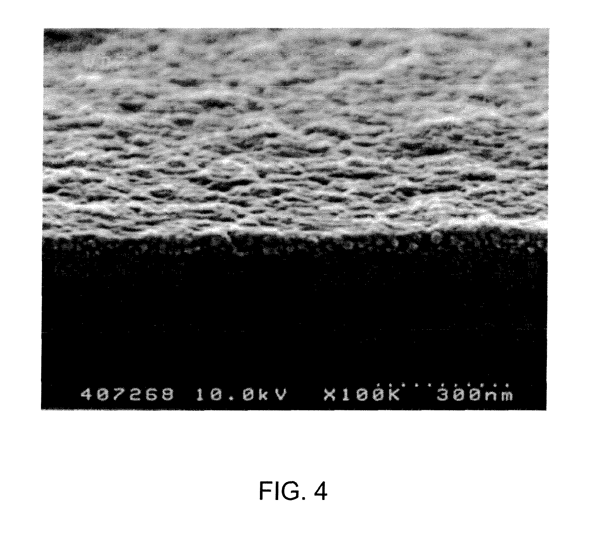

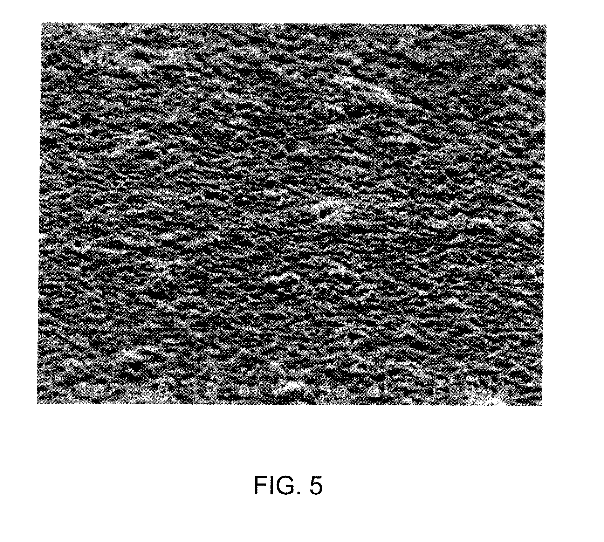

After the formation of the anti-fogging film, the glass sheet was allowed to stand to be dried. Thereafter, this was heated for 30 minutes in a hot-air drying furnace that had been heated to 120°C. Thus, an anti-fogging glass sheet was obtained. The anti-fogging glass sheet thus obtained was observed with the SEM. The results are shown in FIGs. 4 and 5. FIG. 4 shows the result of observation of the cross section, while FIG. 5 shows the result of observation of the surface. It was found out that a part of the anti-fogging film permeated into the gaps of the porous film and the anti-fogging film also formed a layer on the surface of the porous film. The anti-fogging film had permeated into some parts of the gaps between the inorganic fine particles contained in the porous film.

The results of the characteristic evaluations of the anti-fogging glass sheet are indicated in Table 3 together with the results of other examples.

**[Table 3]**

| Examples | 1 | 2 | 3 | 4 | 5 | 6 | 7 |
|---|---|---|---|---|---|---|---|
| Coating Solution for Porous Film | (A) | (A) | (B) | (C) | (D) | (A) | (A) |
| Film Thickness (nm) | 50 | 50 | 40 | 60 | 50 | 50 | 50 |
| Temperature for heating Porous Film (°C) | -- | 150 | -- | -- | -- | -- | -- |
| Coating Solution for Anti-Fogging Film | (a) | (a) | (a) | (a) | (a) | (b) | (c) |
| Temperature for drying Anti-Fogging Film (°C) | 120 | 120 | 120 | 120 | 120 | 120 | 120 |
| Appearance | ○ | ○ | ○ | ○ | ○ | ○ | ○ |
| Anti-Fogging Properties | ○ | ○ | ○ | ○ | ○~Δ | ○ | ○ |
| Abrasion Resistance | ○ | ○ | ○ | ○ | ○ | ⊚ | ⊚ |
| Retention of Anti-Fogging Properties | ○ | ○ | ○ | ○ | ○ | ⊚ | ○ |

In Example 1, an anti-fogging glass sheet was obtained that was excellent in appearance, anti-fogging properties, and abrasion resistance. This is because the porous film to serve as a base allowed the anti-fogging film with which the porous film was overcoated to retain durabilities such as abrasion resistance, etc.

In Example 1, the anti-fogging film was formed using a copolymer of methyl vinyl ether and maleic anhydride that was a hydrophilic organic polymer. This hydrophilic organic polymer changes the carboxyl group that originates in the maleic anhydride part to a functional group by being hydrolyzed. This functional group allows high hydrophilic and anti-fogging properties to be exhibited.

### Example 2

Like Example 1, flow coating was carried out using the solution (A) and thereby a porous film was produced. Thereafter, it was dried for 30 minutes in the hot-air drying furnace that had been heated to 150°C. Thus, a glass sheet with the porous film was obtained.

Subsequently, the glass sheet with the porous film was flow-coated with the solution (a) in the same manner as in Example 1. Thus, an anti-fogging glass sheet was obtained. The results of the characteristic evaluations of the anti-fogging glass sheet are indicated in Table 3.

In Example 2, the porous film was cured by heating. In Example 1, however, the porous film was cured not by heating but by allowing it to stand at normal temperature overnight. Although the porous film was formed without being heated in Example 1, it turned out from the evaluation results that it had a film strength equivalent to that of the heated film obtained in Example 2. It has great practical significance to obtain a cured film without heating when a material subject to a restriction on the temperature at which it is heated, for instance a resin film, is used for a substrate.

### Example 3

An anti-fogging glass sheet was obtained in the same manner as in Example 1 except that the solution (B) was used as the coating solution for forming a porous film. The results of the characteristic evaluations of the anti-fogging glass sheet are indicated in Table 3.

In Example 3, the thickness of the porous film slightly decreased as compared to that obtained in Example 1, corresponding to a slight decrease in amount of fine silica particles in the coating solution for forming a porous film. However, the anti-fogging glass sheet had good characteristics.

### Example 4

An anti-fogging glass sheet was obtained in the same manner as in Example 1 except that the solution (C) was used as the coating solution for forming a porous film. The results of the characteristic evaluations of the anti-fogging glass sheet are indicated in Table 3.

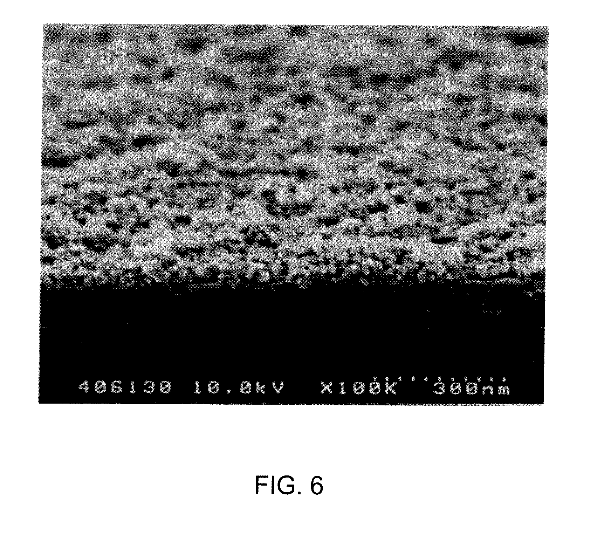

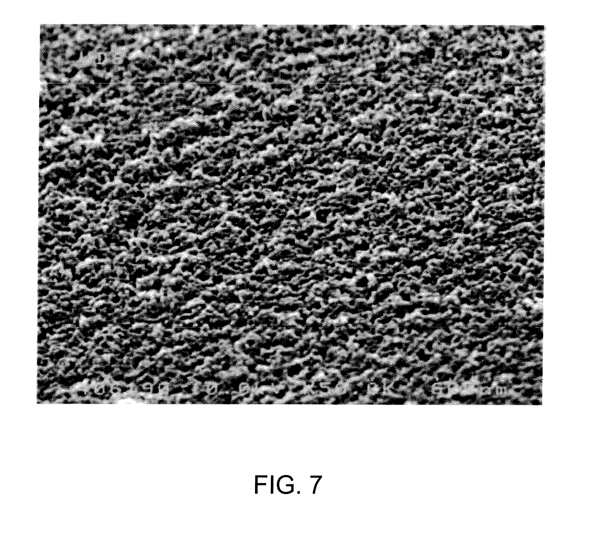

In Example 4, chain colloidal silica (ST-OUP) was used instead of the spherical colloidal silica (ST-C). FIGs. 6 and 7 show the results of observation of the state where the porous film alone was formed (a glass sheet with a porous film), using the SEM. FIG. 6 shows the result of observation of the cross section, while FIG. 7 shows the result of observation of the surface. As compared to Example 1, the porous film formed herein had relatively rough irregularities at the surface. However, it was excellent in appearance, anti-fogging properties, and abrasion properties.

### Example 5

An anti-fogging glass sheet was obtained in the same manner as in Example 1 except that the solution (D) was used as the coating solution for forming a porous film. The results of the characteristic evaluations of the anti-fogging glass sheet are indicated in Table 3.

In Example 5, the initial anti-fogging properties decreased slightly with a slight increase in the amount of UPTS to be added for providing the porous film with a hydrophilic property. Conceivably, this is because the porosity of the porous film decreased with an increase in the UPTS component ratio and thereby the water absorption effect provided by the porous structure was reduced slightly. The amount of the silane coupling agent can be set in a range that allows the porous film to maintain the porous structure. In the solution (A), the ratio of the mass of metal oxide (R_{f}SiO_{3/2}) produced from a hydrolysate of UPTS to the mass of metal oxide (SiO₂) produced from a hydrolysate of TEOS is 0.08. On the other hand, the above-mentioned ratio is 0.27 in the solution (D). The above-mentioned mass ratio can be 0.25 or lower or furthermore 0.2 or lower, although it also depends on various conditions.

### Example 6

An anti-fogging glass sheet was obtained in the same manner as in Example 1 except that the solution (b) was used as the coating solution for forming an anti-fogging film. The results of the characteristic evaluations of the anti-fogging glass sheet are indicated in Table 3.

In Example 6, since the coating solution for forming an anti-fogging film contains a hydrophilic organic polymer and a surfactant, an anti-fagging film with excellent homogeneity can be obtained. In addition, improvement in the retention of anti-fogging properties was confirmed.

### Example 7

An anti-fogging glass sheet was obtained in the same manner as in Example 1 except that the solution (c) was used as the coating solution for forming an anti-fogging film. The results of the characteristic evaluations of the anti-fogging glass sheet are indicated in Table 3.

In the table, although the abrasion resistance of the anti-fogging glass sheet obtained in Example 7 is indicated as is equivalent to that obtained in Example 6, it exceeded that of the anti-fogging glass sheet according to Example 6. In Example 7, the coating solution for forming an anti-fogging film contains a crosslinking agent having an epoxy group in addition to a hydrophilic organic polymer and a surfactant. The crosslinking agent reacts with a carboxylic acid group that is produced through hydrolysis of a maleic anhydride group contained in the hydrophilic organic polymer, and thereby crosslinks the hydrophilic organic polymers. This further improves the abrasion resistance of the anti-fogging film.

### Comparative Example 1

In Comparative Example 1, a glass sheet with a porous film obtained in the same manner as in Example 2 was subjected to the characteristic evaluations without having an anti-fogging film formed thereon. The results are indicated in Table 4.

**[Table 4]**

| Comparative Examples | 1 | 2 | 3 |
|---|---|---|---|
| Coating Solution for Porous Film | (A) | (E) | (F) |
| Film Thickness (nm) | 50 | 60 | 5 |
| Temperature for heating Porous Film (°C) | 150 | 150 | 150 |
| Coating Solution for Anti-Fogging Film | -- | (a) | (a) |
| Temperature for drying Anti-Fogging Film (°C) | -- | 120 | 120 |
| Appearance | ○ | ○ | ○ |
| Anti-Fogging Properties | ○ | ○ | × |
| Abrasion Resistance | ○ | Δ | × |
| Retention of Anti-Fogging Properties | × | × | × |

In Comparative Example 1, the appearance, abrasion resistance, and initial anti-fogging properties were comparable to those obtained in the cases where the anti-fogging films were formed. Conceivably, the addition of the silane coupling agent having a hydrophilic organic group to the coating solution for forming a porous film contributed to the excellent characteristics. However, when the anti-fogging film is not formed, the anti-fogging properties deteriorated considerably. This indicates that the anti-fogging properties also are exhibited by the water absorptivity of the porous film, but the anti-fogging film is required to retain it.

### Comparative Example 2

An anti-fogging glass sheet was obtained in the same manner as in Example 2 except that the solution (E) was used as the coating solution for forming a porous film. The results of the characteristic evaluations of the anti-fogging glass sheet are indicated in Table 4.

When the above-mentioned silane coupling agent was not added to the coating solution for forming a porous film, the initial anti-fogging properties are obtained but the abrasion resistance and the retention of the anti-fogging properties deteriorate. The anti-fogging properties obtained after the anti-fogging glass sheet according to Comparative Example 2 was subjected to the abrasion resistance test were inferior to those of Comparative Example 1. Conceivably, this is because the characteristics of the surface of the porous film having a lower hydrophilic property were reflected when the anti-fogging film abraded. This indicates that the above-mentioned silane coupling agent contributes to improvement in durability of the anti-fogging film as well as retention of the anti-fogging properties when the performance of the anti-fogging film deteriorates due to abrasion or change with time.

### Comparative Example 3

An anti-fogging glass sheet was obtained in the same manner as in Example 2 except that the solution (F) was used as the coating solution instead of the solution (A). The results of the characteristic evaluations of the anti-fogging glass sheet are indicated in Table 4.

In this anti-fogging glass sheet, since the inorganic fine particles were not added, the film was not porous. This indicates that the porous structure of a porous film improves water absorptivity and contributes to exhibition of the anti-fogging properties.

### Industrial Applicability

The present invention improves the performance of anti-fogging articles that can be used as mirrors, glass sheets for automobiles, window glasses for buildings, glasses, etc., and thus has a great utility value.

## Claims

1. An anti-fogging article, comprising:
an article;
a porous film formed on a surface of the article; and
a hydrophilic film formed on the porous film,
wherein the porous film contains inorganic fine particles and a binder, the binder covering at least a part of each surface of the inorganic fine particles and being interposed between the inorganic fine particles,
the binder contains a metal oxide as its main component and a hydrophilic organic group other than an alkoxyl group, and
the hydrophilic film contains a hydrophilic organic polymer.

2. The anti-fogging article according to claim 1, wherein the hydrophilic organic group is at least one selected from the group consisting of an amino group, an epoxy group, a ureide group, and a polyalkylene oxide group.

3. The anti-fogging article according to claim 2, wherein the hydrophilic organic group is at least one selected from the group consisting of an amino group, an epoxy group, and a ureide group.

4. The anti-fogging article according to claim 1, wherein the hydrophilic organic group has a -NH₂ structure at its end.

5. The anti-fogging article according to claim 1, wherein the inorganic fine particles are fine silica particles.

6. The anti-fogging article according to claim 1, wherein the inorganic fine particles each have a diameter of 20 nm to 300 nm.

7. The anti-fogging article according to claim 1, wherein the metal oxide is a silicon oxide.

8. The anti-fogging article according to claim 1, wherein the porous film has a thickness of 20 nm to 300 nm.

9. The anti-fogging article according to claim 1, wherein the hydrophilic organic polymer has a carboxyl group or an acid anhydride structural unit.

10. The anti-fogging article according to claim 1, wherein the hydrophilic organic polymer has a structural unit indicated by the following chemical formula 1: 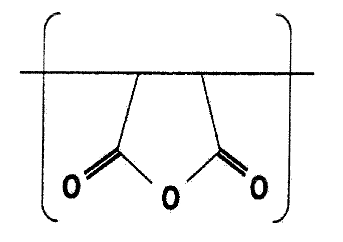 or a structural unit produced through hydrolysis of the structural unit.

11. The anti-fogging article according to claim 1, wherein the hydrophilic organic polymer is a copolymer of an acid anhydride and a vinyl group-containing compound.

12. The anti-fogging article according to claim 1, wherein the hydrophilic film further comprises at least one selected from an anionic surfactant and a nonionic surfactant.

13. The anti-fogging article according to claim 12, wherein the anionic surfactant is dialkylsodium sulfosuccinate.

14. A process for producing an anti-fogging article comprising an article, a porous film formed on a surface of the article, and a hydrophilic film formed on the porous film, the process comprising:
forming the porous film by applying a first coating solution onto the surface of the article and drying the surface of the article, the first coating solution containing:
inorganic fine particles;
a silane coupling agent having a hydrophilic organic group other than an alkoxyl group or a hydrolysate of the silane coupling agent;
a hydrolyzable and condensation-polymerizable organometallic compound having an alkoxyl group or a hydrolysate of the organometallic compound; and
a solvent; and
forming the hydrophilic film by applying a second coating solution containing a hydrophilic organic polymer onto the porous film.

15. The process for producing an anti-fogging article according to claim 14, wherein the hydrophilic organic group is at least one selected from the group consisting of an amino group, an epoxy group, a ureide group, and a polyalkylene oxide group.

16. The process for producing an anti-fogging article according to claim 15, wherein the hydrophilic organic group is at least one selected from the group consisting of an amino group, an epoxy group, and a ureide group.

17. The process for producing an anti-fogging article according to claim 14, wherein the hydrophilic organic group has a -NH₂ structure at its end.

18. The process for producing an anti-fogging article according to claim 14, wherein the inorganic fine particles are fine silica particles.

19. The process for producing an anti-fogging article according to claim 14, wherein the inorganic fine particles each have a diameter of 20 nm to 300 nm.

20. The process for producing an anti-fogging article according to claim 14, wherein the organometallic compound is a silicon compound.

21. The process for producing an anti-fogging article according to claim 20, wherein the silicon compound is silicon tetraalkoxide or a compound obtained by substituting at least one alkoxyl group of silicon tetraalkoxide by a chloro group.

22. The process for producing an anti-fogging article according to claim 14, wherein the porous film has a thickness of 20 nm to 300 nm.

23. The process for producing an anti-fogging article according to claim 14, wherein the solvent is alcohol with a carbon number of 1 to 5.

24. The process for producing an anti-fogging article according to claim 14, wherein the first coating solution further comprises water and a hydrolysis catalyst.

25. The process for producing an anti-fogging article according to claim 14, wherein the first coating solution is prepared so that a mass ratio of an organic group-containing silicon oxide produced through dehydration of the hydrolysate of the silane coupling agent to a metal oxide produced through dehydration of the hydrolysate of the organometallic compound is 0.01 to 5.0.

26. The process for producing an anti-fogging article according to claim 14, wherein the hydrophilic organic polymer has a carboxyl group or an acid anhydride structural unit.

27. The process for producing an anti-fogging article according to claim 14, wherein the hydrophilic organic polymer has a structural unit indicated by the following chemical formula 1: 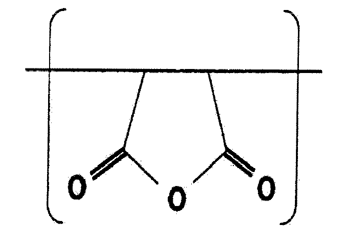 or a structural unit produced through hydrolysis of the structural unit.

28. The process for producing an anti-fogging article according to claim 14, wherein the hydrophilic organic polymer is a copolymer of an acid anhydride and a vinyl group-containing compound.

29. The process for producing an anti-fogging article according to claim 14, wherein the hydrophilic film further comprises at least one selected from an anionic surfactant and a nonionic surfactant.

30. The process for producing an anti-fogging article according to claim 29, wherein the anionic surfactant is dialkylsodium sulfosuccinate.

31. The process for producing an anti-fogging article according to claim 14, wherein the second coating solution further comprises a crosslinking agent.

32. The process for producing an anti-fogging article according to claim 31, wherein the crosslinking agent comprises an epoxy group.

33. The process for producing an anti-fogging article according to claim 14, wherein after the hydrophilic film is formed, the article is heated to 50°C to 250°C.
